# EUROPEAN PATENT APPLICATION

(11) **EP 3 002 311 A1**
(43) Date of publication of application: **06.04.2016**
(21) Application number: 14187638.3
(22) Date of filing: 03.10.2014
(51) Int. Cl.: C08K 5/00, C08K 5/32, C08K 5/5357, C08J 9/18, C08K 3/04

(54) **Flame retardant pre-expanded polymer material, in-mold or extruded foamed article and process for producing the material**

(71) Applicant: Kaneka Belgium N.V., 2260 Westerlo-Oevel (BE); Kaneka Corporation, Kita-ku, Osaka 530-8288 (JP)
(72) Inventor: Van Ravenstyn, Pierre, 2440 Geel (BE); Laeveren, Nancy, 2431 Veerle (BE)
(74) Representative: Kirkpatrick

(57) **Abstract**

This invention provides a flame retardant pre-expanded polymer material comprising:
(A) a thermoplastic polymer material;
(B) an organic phosphorus-containing compound; and
(C) a hindered amine having an OR group substituted directly on its N-atom, wherein R is a saturated or unsaturated hydrocarbyl group;

wherein the phosphorus-containing compound (B) is not a phosphoric ester or a phosphate, and wherein the weight ratio (B)/(C) is from 1.9 to 10.

This invention also provides a process for producing the material, and a foamed article prepared by in-mold foaming or extrusion-foaming the material.

## Description

### Field of the Invention

The present invention relates to flame retardant pre-expanded polymer materials, especially based on polyolefin particles. The present invention also relates to flame retardant foamed articles prepared by in-mold foaming or extrusion-foaming such flame retardant pre-expanded polymer materials. The cellular molded or extruded foamed articles thus formed are especially used in applications for vehicles, building, construction, furniture, electrical and electronic appliances. The present invention further relates to a process for producing said flame retardant pre-expanded polymer materials.

### Background of the invention

Nowadays, thermoplastic polymers are frequently made flame-retardant by adding phosphorus- or halogen-containing compounds. Mixtures of phosphorus-and nitrogen-containing compounds are also used as flame-retardant agents. A first problem with such compounds is that the flame-retardant effect is too weak or the thermal stability of the resulting flame-retardant plastic is too low.

Salts of phosphinic acids have also been shown to be effective flame-retardant additives for polymers, producing minor changes in the thermal properties of the plastic, but still showing an insufficient flame-retardant effect. Halogen-containing organic compounds are assumed to act by chemically or physically interfering with combustion processes. It is assumed that e.g. organic halogen forms (such as decabromodiphenyl oxide, hexabromocyclodecane and tetrabromobisphenol A) produce hydrogen bromide which interacts with the free radical organic polymer.

In the recent years however, individual brominated flame retardants (e.g. polybrominated diphenyl ethers) were found potentially harmful to the environment and human health. Based on the results of the assessment of the dangers of brominated flame retardants, the provisions of the European Union since July 2006 prohibited the production and use of pentabromodiphenyl ether and octabromodiphenyl oxide, while limiting decabromodiphenyl oxide to certain uses. Various derivatives, for example ether, ester and carbonate derivatives, of pentaerythritol phosphate are known as flame retardant additives. A bromine-containing pentaerythritol phosphoester, pentaerythritol double-spiro phosphoryl double-tribromo neopentyl alcohol ester, is also known as a fire retardant.

Various hindered amines are commercially available and known to achieve thermal stabilization of various classes of thermoplastic polymers, especially when the latter are in the form of thin films. Flame retardant polyolefin pre-expanded particles made from a resin composition comprising a polyolefin and a sterically hindered amine ether flame retardant are also known in the art, especially from EP 1454947-A. WO 2012/028953 discloses that the addition of carbon black to polyolefins does not impart a pre-expanded and foamed article therefrom with enhanced flame resistance but worsens the burning behavior. WO 2012/028953 also discloses that the incorporation of powdered activated carbon (hereinafter referred to as "PAC") and a sterically hindered amine ether flame retardant in a foamed polyolefin further increases flame resistance. Foamed articles made from such pre-expanded particles can be suitably used in various fields requiring flame resistance or self-extinguishing property, such as transportation, building, construction, furniture, electrical and electronic appliances. However, with the more and more stringent level of flame retardancy required in these and other fields, such as electrical and electronic appliances, there is a growing need for further improving these polyolefin foamed materials. In particular, standards are getting harsher in all industrial fields and it may now be required, for safety purpose, that the burning test specimen does not drip particles which could ignite a dry absorbent placed in the neighborhood, e.g. below, the burning test specimen is not ignited by dripping particles.

As a general rule, the skilled person knows that flame retardancy is much more difficult to achieve in a thermoplastic polymer foam than in a thermoplastic polymer film, tube or other form of non-expanded material. In particular, a recipe that has been found suitable for a non-expanded thermoplastic polymer will not necessarily be suitable for the corresponding expanded form of this polymer. Also, it is rather common that special polymer grades are preferred for making thermoplastic polymer foams, due to the additional characteristics that are required, such as surface appearance, cushioning property, closed cell proportion in the foam, and mechanical properties such as, but not limited to, impact strength, dimensional shrinkage and compressive strength. All these properties of the foam material are likely to be affected by the presence of further additives, in such a way that the optimal bundle of properties can no longer meet the requirements of the final expanded product in the relevant field of industry.

One problem addressed by the present invention therefore is to find a composition of expanded or foamed polyolefin material which meets this dripping and/or non ignition requirement, without impairing, or being detrimental to, the other requirements of the resulting foam, such as its mechanical properties, cushioning properties and surface appearance. At the same time, the foam should exhibit good moldability or extrudability, and should not generate harmful gases when burning. Another problem addressed by the present invention is to overcome malodor generation during processing due to certain flame retardant additives. This odor problem results into additional production costs e.g. due to the need for additional ventilation of the production facility. Yet another problem addressed by the present invention is to overcome the risk of migration of certain flame retardant additives towards the surface of the polyolefin pre-expanded particles and/or the foamed article produced therefrom. This migration problem is important since it may be associated with a poor compatibility or a nonhomogeneous distribution of the additive throughout the thermoplastic polymer matrix and since it may therefore result in internal defects or surface defects of the foamed thermoplastic article.

It is an object of the present invention to provide flame retardant thermoplastic polymer foamed articles which can be produced with good moldability or extrudability, which do not generate harmful gas when burning, and which exhibit better flame retardancy than thermoplastic polymer foamed articles known in the art. In particular, it is an object of the present invention to provide flame retardant thermoplastic polymer foamed articles which do not drip particles when burning, and therefore do not ignite proximal organic materials. A further object of the present invention is to provide flame retardant thermoplastic polymer foamed articles having both excellent flame resistance and mechanical properties, cushioning properties and surface appearance, compared to known thermoplastic polymer foamed articles including a hindered amine ether as a flame retardant additive.

Another object of the present invention is to provide flame retardant thermoplastic polymer pre-expanded particles which can be molded into foamed articles having both excellent flame resistance and physical properties, without inducing processing problems either during pre-expansion or during the subsequent molding step, and even if significant amounts of other additives such as powdered activated carbon and/or carbon black are also present.

### Summary of the invention

It has surprisingly been found, and this is the basis of the present invention, that the incorporation, in selected proportions, of both an organo-phosphorous compound, except for a phosphoric ester, and a hindered amine substituted with an OR group directly on its nitrogen atom, into an expanded (foamed) thermoplastic polymer material increases flame retardancy, in particular precludes the occurrence of dripping particles during burning and thus prevents ignition of proximal organic materials. This property is achieved without impairing the other mechanical and cushioning characteristics of the foamed thermoplastic polymer material and without impairing the capacity to incorporate other optional additives.

Therefore the present invention relates to a flame retardant pre-expanded polymer material as defined in claim 1, i.e. comprising:
(A) a thermoplastic polymer material;
(B) an organic phosphorus-containing compound; and
(C) a hindered amine having an OR group substituted directly on its N-atom, wherein R is a saturated or unsaturated hydrocarbyl group;
wherein the phosphorus-containing compound (B) is not a phosphoric ester or a phosphate, and wherein the weight ratio (B)/(C) is from 1.9 to 10.

The flame retardant pre-expanded polymer material of the instant case may be produced, *inter alia,* by a process as defined in claim 12, i.e. comprising the steps of:
- providing a mixture of a thermoplastic polymer material (A) with an organic phosphorus-containing compound (B) and a hindered amine (C) having an OR group substituted directly on its N-atom, R being a saturated or unsaturated hydrocarbyl group, wherein the phosphorus-containing compound (B) is not a phosphoric ester or a phosphate, and wherein the weight ratio (B)/(C) being from 1.9 to 10,
- impregnating said mixture with a volatile blowing agent in an aqueous suspension under high temperature and high pressure conditions, and
- decompressing the impregnated mixture to atmospheric pressure.

The flame retardant pre-expanded polymer material of the instant case may also be produced through extrusion-foaming.

The instant case also relates to a flame retardant foamed article as defined in claim 10, i.e. prepared by in-mold foaming of the flame retardant pre-expanded polymer material of the invention. The invention shall be better understood upon reading the following description.

### Detailed description of the invention

Each compound of the flame retardant pre-expanded polymer material of the present invention will now be presented in more details.

In order to achieve the goals of the present invention, there is no stringent limitation on the choice of the organic phosphorus-containing compound (B) as long as it is not a phosphoric ester or a phosphate, and as long as it is combined with the hindered amine (C) in the selected ratio by weight. As is well known to the skilled person in the art, there are numerous sub-classes of organic phosphorus-containing compounds apart from phosphoric esters and phosphates. Although, as the skilled person is well aware, there may be a diversity of flame retardant properties among these sub-classes of organic phosphorus-containing compounds, it can be concluded from the tests performed by the present inventors, that they provide a significant enhancement of flame retardancy in pre-expanded polymer materials, especially in pre-expanded polypropylene-based materials, when combined with the hindered amine (C) in a selected weight ratio (B)/(C) ranging from about 1.9 to 10. Also, the invention is not limited to the incorporation of a single organo-phosphorous compound (B) but encompasses the incorporation of two or more compounds (B) which may, or may not, belong to different sub-classes thereof. The selection of two or more compounds (B) is only limited by their compatibility, which is usually good due to their common organic nature, and can be easily determined by the skilled person without undue burden.

For the purpose of illustrating various embodiments of the present invention, suitable sub-classes of organic phosphorus-containing compounds (B), other than phosphoric esters and phosphates, are listed below.

In one embodiment, the organo-phosphorous compound (B) is nitrogen-free, i.e. does not contain any N-atom in its structural formula. In another embodiment, the organo-phosphorous compound (B) is both nitrogen-free and chlorine-free, i.e. does not contain any Cl-atom in its structural formula. Many such compounds are commercially available.

A first sub-class within this group of nitrogen-free organo-phosphorous compounds (B) consists of phosphonates. Esters and partial esters containing R-PO(OH)₂ and/or R-PO(OR₁)₂ groups (wherein R is a hydrocarbyl group such as methyl, benzyl, aryl, alkynyl, allenyl, vinyl or substituted vinyl; and wherein R₁ is a hydrocarbyl group such as alkyl or aryl), and salts thereof, are suitable for carrying out the present invention. Phosphonic acid esters and phosphonate salts are advantageously soluble in water and common alcohols. Examples include alkyl phosphonates such as, but not limited to, dimethyl methylphosphonate, a very effective flame retardant due to its high phosphorus content. In turn, phosphonates can be sub-divided into sub-groups such as alkylphosphonic and arylphosphonic acids and esters thereof, mono-phosphonates, acyclic bisphosphonates, cyclic phosphonates, and cyclic bisphosphonates. Phosphonates represented by the structural formula 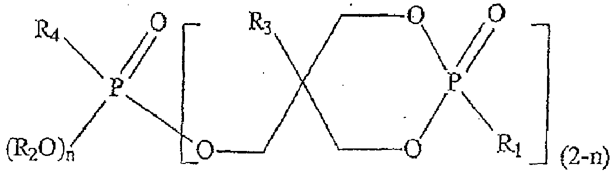 wherein R₁ and R₂ are independently C₁₋₄ alkyl, R₃ is H or C₁₋₄ alkyl, R₄ is C₉₋₂₂ alkyl, C₉₋₂₂ cycloalkyl, C₉₋₂₂ aryl or C₉₋₂₂ aralkyl, and n = 0 or 1, as disclosed by EP 1651737-B, are also suitable. Cyclic bisphosphonates (also referred in the literature as spirophosphonates), such as pentaerythrityl diphosphonates disclosed by U.S. Patent No. 4,174,343 and GB 1,515,223, being represented by the structural formula 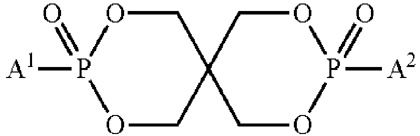 wherein A¹ and A² are independently C₁₋₁₀ alkyl, C₂₋₁₀ alkenyl, benzyl, phenylethyl, phenyl or naphthyl, are particularly suitable. Other cyclic phosphonic esters have been disclosed in FR 1,503,429. A suitable nitrogen-free organo-phosphorous compound (B) is commercially available in the form of a white powder under the trade name AFLAMMIT PCO 900 (P content 24%). It may be micronized or not.

Another sub-class of nitrogen-free organo-phosphorous compounds (B) consists of organic phosphites. Examples include alkyl and arylalkyl phosphites (preferably wherein the alkyl group has from 1 to 4 carbon atoms) such as dimethyl phosphite, diethyl phosphite, trimethyl phosphite, dibutylphosphite, triisopropyl phosphite, dibenzyl phosphite, bis(2,2,2-trifluoroethyl) phosphite, tris(2,2,2-trifluoroethyl) phosphite and tris(1,1,1,3,3,3-hexafluoro-2-propyl) phosphite. diphenyl phosphite. Further examples include cyclic phosphites such as, but not limited to, trimethylolethane cyclic phosphite (also known as 4-methyl-2,6,7-trioxa-1-phosphabicyclo[2.2.2]octane) and cyclic hydrogen phosphites as broadly described in US Patent No. 3,152,164, such as for instance 2-hydroxy-4,5-dimethyl-1,3,2-dioxaphospholane (2,3-butylene hydrogen phosphite), 2-hydroxy-4-methyl-1,3,2-dioxaphosphorinane, 2-hydroxy-4-methyl-1,3,2-dioxaphospholane (propylene hydrogen phosphite), 2-hydroxy-1,3,2-dioxaphosphorinane (trimethylene hydrogen phosphite), 2-hydroxy-5,5-dimethyl-1,3,2-dioxaphosphorinane, and 2-hydroxy-4-propyl-5-ethyl-1,3,2-dioxaphosphorinane.

Another sub-class of nitrogen-free organo-phosphorous compounds (B) consists of organic phosphinites such as ethyl phosphinite, and phosphinic or diphosphinic acid metal salts represented by the formulae RR'P(=O)-OMe and MeO-PR(=O)-R₁-PR'(=O)-OMe, wherein R and R' are independently selected from the group consisting of C₁₋₆ alkyl, C₃₋₈ cycloalkyl, C₆₋₁₆ aryl or aralkyl, Me is a metal from Group I (alkali), II (alkaline-earth, or zinc) or III (e.g. aluminium) of the Periodic System, and R₁ is C₁₋₆ alkylene, arylene, arylalkylene or arenebisalkylene linking group. Non-limiting examples thereof are the alkali, magnesium, zinc and aluminum salts of dimethyl phosphinic, methylethylphosphinic, methylpropylphosphinic, methylhexylphosphinic, ethylphenylphosphinic, diethylphosphinic, ethane-1,2-dimethylphosphinic, ethane-1,2-diethylphosphinic, ethane-1,2-diphenylphosphinic and butane-1,4-dimethylphosphinic acid.

Another sub-class of nitrogen-free organo-phosphorous compounds (B) consists of phosphinates such as aluminium diethyl phosphinate.

In a specific embodiment of the present invention, the organic nitrogen-free phosphorous-containing compound (B) may be a polyol phosphate alcohol. Many such compounds are commercially available, such as bis(pentaerythritol phosphate alcohol) alkyl phosphonate wherein the alkyl group has from 1 to 4 carbon atoms, or a (pentaerythritol phosphate alcohol) phosphite. Due to their low bromine content, brominated derivatives thereof, such as a dibromo neopentyl glycol phosphate or a pentaerythritol double-spiro phosphoryl double-tribromo neopentyl alcohol ester, can also be used as a compound (B).

In another embodiment of the present invention, the organo-phosphorous compound (B) is nitrogen-containing, i.e. does contain one or more N-atoms in its structural formula. Examples from this group include phosphoramidates, phosphoramidites, phosphonamides, phosphinamides, and organic phosphazenes and salts thereof.

Suitable examples of phosphoramidates include those represented by the following structural formulae 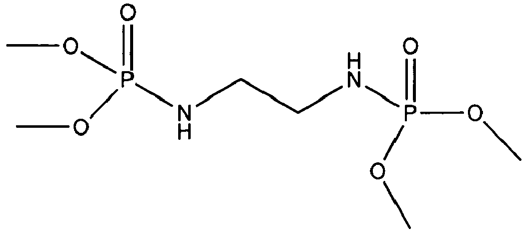 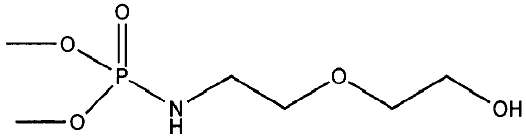 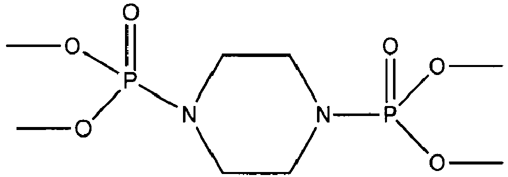 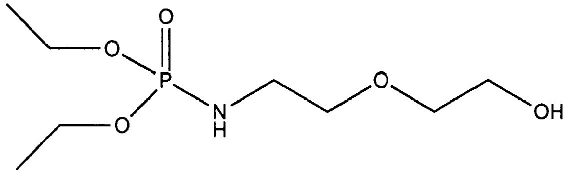 and

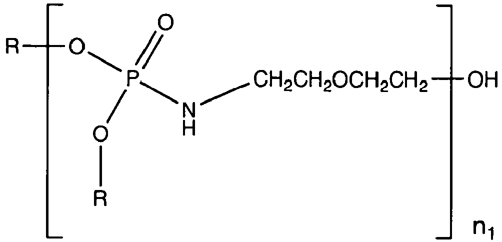

R = CH₃, CH₂CH₃

n₁=2-10

all of them being disclosed by WO 2009/153034.

Suitable organic phosphazenes (also known as iminophosphoranes or phosphine imides) and salts (in particular chlorides and fluorides) thereof include a phosphorus atom covalently linked to a N-atom by a double bond and to three other atoms or radicals by single bonds. Representative but non limiting examples thereof include bis(triphenylphosphine)iminum chloride, BEMP (2-tert-butylimino-2-diethylamino-1,3-dimethylperhydro-1,3,2-diazaphosphorine), BTPP (tert-butylimino)tris-(pyrrolidino)phosphorane), and t-Bu-P4 (3-*t*-butylimino-1,1,1,5,5,5-hexakis(dimethylamino)-3 {[tris(dimethylamino)phosphoranylidene]amino}-1λ⁵, 3λ⁵, 5λ ⁵-1,4-triphosphazadiene). Suitable cyclic organic phosphazenes include those represented by the following structural formula 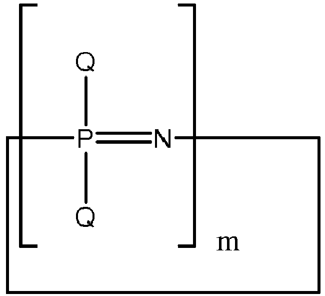 wherein m = 3 - 20, and each Q group is either a phosphate group or a aryloxy or alkoxy group containing no phosphorous or halogen atoms, as disclosed by WO 2009/055993. A species thereof is the compound DPPPZ shown in the following structural formula (wherein Ph = phenyl)

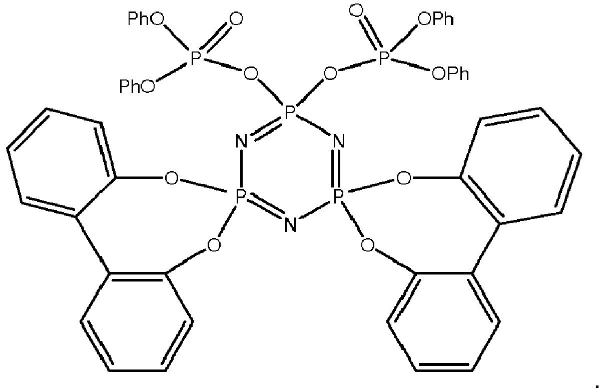

In order to achieve the goals of the present invention, there is no stringent limitation on the choice of the hindered amine (C) as long as it is combined with the organic phosphorus-containing compound(s) (B) in the selected ratio by weight. As is well known to the skilled person, there are numerous sub-classes of hindered amines (C). Although, as the skilled person is well aware, there may be a diversity of flame retardant properties among these sub-classes of the hindered amines, it can be concluded from the tests performed by the applicant, that they provide a significant enhancement of flame retardancy when combined with the organic phosphorus-containing compound(s) (B) in a selected weight ratio (B)/(C) ranging from about 1.9 to 10. Also, the invention is not limited to the incorporation of a single hindered amine (C) but encompasses the incorporation of two or more such compounds (C) which may, or may not, belong to different sub-classes thereof. The selection of two or more compounds (C) is only limited by their compatibility, which is usually good due to their common organic nature, and can be easily determined by the skilled person in the art without undue burden.

For the purpose of illustrating various embodiments of the present invention, suitable sub-classes of hindered amines (C) are listed below. The hindered amines (C) of the present invention have an OR group substituted directly on its N-atom, wherein R is a saturated or unsaturated hydrocarbyl group. Suitable N-substituted hindered amines (C) are represented by the following structural formula 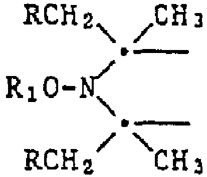 wherein R is hydrogen or methyl, and R₁ is selected from the group consisting of C₁₋₁₈ alkyl, C₂₋₁₈ alkenyl, C₂₋₁₈ alkynyl, C₅₋₁₂ cycloalkyl, C₅₋₈ cycloalkenyl, C₆₋₁₀ aryl and C₇₋₉ aralkyl, as broadly described by EP 0309402-B. More specific examples thereof are disclosed from page 3 line 33 to page 8 line 58 of EP 0309402-B.

In one particular embodiment of the present invention, the hindered amine (C) includes at least a triazine moiety. Thus, examples of suitable N-substituted hindered amines include, but are not limited to, N,N',N"'-tris{2,4-bis[(1-hydrocarbyloxy-2,2,6,6-tetramethylpiperidin-4-yl)alkylamino]-s-triazin-6-yl}-3,3'-ethylenediiminodipropylamines, their pure isomers, and bridged derivatives thereof as broadly described by EP 0889085-B. More specific examples thereof are disclosed from page 2 line 32 to page 4 line 6 of EP 0889085-B. Suitable hindered amines (C) are commercially available from BASF, under the trade name FLAMSTAB NOR 116, and from CLARIANT under the trade name HOSTAVIN NOW XP.

Further suitable N-substituted hindered amines are represented by the following structural formula 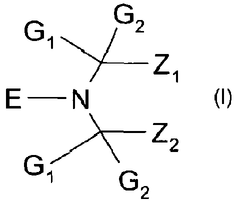 wherein G₁ and G₂ are independently C₁₋₈ alkyl or are together pentamethylene; Z₁ and Z₂ are each methyl, or Z₁ and Z₂ together form a linking moiety which may additionally be substituted by an ester, ether, amide, amino, carboxy or urethane group; and E is C₁₋₈ alkoxy, C₅₋₁₂ cycloalkoxy or C₇₋₁₅ aralkoxy, or E is a group -O-C(O)-C₁₋₁₈ alkyl or -O-T-(OH)_{b}; T is a C₁₋₁₈ alkylene, C₅₋₁₈ cycloalkylene or C₅₋₁₈ cycloalkenylene chain, or a C₁₋₄ alkylene chain substituted by phenyl or by C₁₋₄ alkyl-substituted phenyl; b is 1-3 with the proviso that b cannot exceed the number of carbon atoms in T, and when b is 2 or 3, each hydroxyl group is attached to a different carbon atom of T. Such compounds are broadly described by EP 2225318-B. More specific examples thereof are disclosed from page 5 line 35 to page 25 line 48 of EP 2225318-B.

Further suitable N-substituted hindered amines are represented by the following structural formulae (Ia) and (Ib) 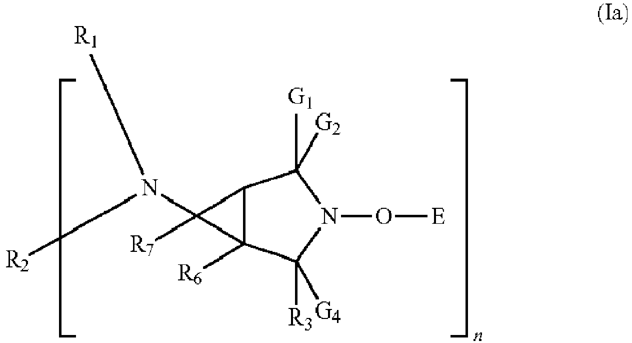 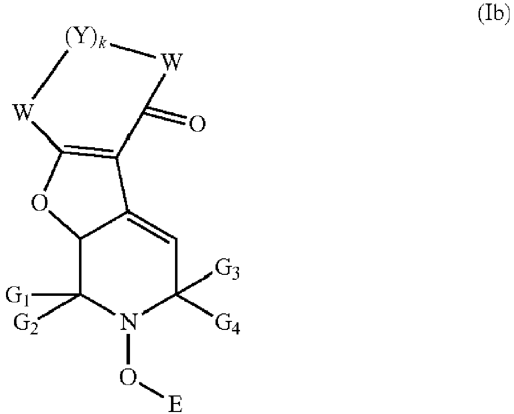 wherein E, Y, W, R₁ - R₇ and G₁ - G₄ are as broadly defined in U.S. Patent No. 8,598,369. More specific examples thereof are disclosed in examples 1 - 12 and tables 1 - 5 of US 8,598,369.

More than one flame-retardant hindered amine additive (C) may be combined with the organic phosphorus-containing compound (B). In one embodiment of the present invention, the particle size of hindered amine additive(s) (C) should not be too distant from the particle size of the organic phosphorus-containing compound (B), so that homogeneity of the resulting mixture can be easily ensured in the presence of the thermoplastic polymer material (A).

In order to achieve the goals of the present invention, the weight ratio (B)/(C) should range from about 1.5 to 10. In one embodiment of the present invention, the weight ratio (B)/(C) ranges from about 2 to 9, or from about 2.0 to 3.5. The skilled person understands that the optimal weight ratio (B)/(C) may depend upon the class of hindered amine (C), the class of the organic phosphorus-containing compound (B) and the selected thermoplastic polymer material (A). However, given the guidance provided herein, the skilled person will be able, without undue burden, to determine the optimal range in each situation. The inventors found that a weight ratio (B)/(C) below 1.9 or above 10 does not provide an enhancement of the flame retardant properties as desired, and especially does not preclude the occurrence of dripping particles during burning. It has also been found that a weight ratio (B)/(C) below 1.9 or above 10 may either induce significant difficulties during processing or may impair the other physical (in particular mechanical and cushioning) characteristics of the foamed thermoplastic polymer material resulting therefrom.

In order to achieve the goals of the present invention, there is no stringent limitation on the choice of the thermoplastic polymer material (A) as long as it is combined with the organic phosphorus-containing compound (B) and the hindered amine (C) in the selected ratio by weight (B)/(C), and as long as it is able to form pre-expanded particles capable of fusing into a foam under suitable molding or extrusion conditions. Suitable thermoplastic polymers (A) are given below.
- polymers and copolymers of mono-olefins and diolefins, for example polypropylene, polyisobutylene, po-lybut-1-ene, poly-4-methylpent-1-ene, polyvinylcyclohexane, polyisoprene or polybutadiene, as well as polymers of cycloolefins, e.g. cyclopentene or norbornene, polyethylene, e.g. high density polyethylene (HDPE), medium density polyethylene (MDPE), low density polyethylene (LDPE), and linear low density polyethylene (LLDPE). Polyolefin resins are superior in chemical resistance, heat resistance and distortion restoration rate after compression as compared to polystyrene, and are therefore preferably used in the present invention as the base material (A) of the pre-expanded particles. Polyolefin resins used in the present invention preferably are homo- and copolymers of 75 to 100% by weight, of an olefin monomer and 25 to 0% by weight of a non-olefinic monomer copolymerizable therewith. If the content of the olefin monomer is less than 75% by weight, the characteristics brought from the olefin monomer are not sufficiently retained. Examples of the olefin monomer are e.g. α-olefins having 2 to 12 carbon atoms, e.g. ethylene, propylene, butene-1, isobutene, hexene-1, 4-methylpentene-1, octene-1 and decene-1. Examples of non-olefinic monomers copolymerizable therewith are e.g. cyclic olefins such as cyclopentene and norbornene, dienes such as 1,4-hexadiene. Ethylene-propylene copolymers containing 0.5% to 15% by weight (preferably 1% to 4%) ethylene and 99.5% to 85% by weight (preferably 96% to 99%) propylene are preferred from the viewpoint that pre-expanded particles having a uniform closed cell structure are easily obtained. Non-crosslinked polyolefin resins are preferred from the viewpoints of cost, recyclability and simplificity of process steps. It is preferable that the polyolefin resins have a melt index (hereinafter referred to as MI, determined according to ASTM 1238 or ISO 1133) from about 0.1 to 50 g/10 minutes, especially from 0.3 to 40 g/10 minutes. If the MI of the polyolefin resins is less than 0.1 g/10 minutes, the fluidity of the resin at the time of foaming is poor and foaming is difficult. If the MI is more than 50 g/10 minutes, it is difficult to achieve a high expansion ratio since the fluidity is excessive.
- ethylene/alkyl acrylate copolymers, ethylene/alkyl methacrylate copolymers, ethylene/vinyl acetate copolymers or ethylene/acrylic acid copolymers and their salts (ionomers).
- aromatic homo- and copolymers derived from vinyl aromatic monomers including styrene, α-methylstyrene, vinyl toluene, ethyl styrene, propyl styrene, and vinyl naphthalene. These homo- and copolymers may have any stereostructure including syndiotactic, isotactic, hemi-isotactic or atactic, although atactic polymers are preferred.
- copolymers including the aforementioned vinyl aromatic monomers and one or more comonomers selected from the group consisting of ethylene, propylene, dienes, nitriles, maleic acid, maleic anhydride, maleimide, vinyl acetate, vinyl chloride and acrylic derivatives, e.g. styrene/butadiene, styrene/acrylonitrile, styrene/alkyl methacrylate, styrene/butadiene/alkyl acrylate, styrene/butadiene/alkyl methacrylate, styrene/maleic anhydride, styrene/acrylonitrile/methyl acrylate; styrene block copolymers such as styrene/butadiene/styrene, styrene/ isoprene/styrene, styrene/ethylene/butylene/styrene or styrene/ ethylene/propylene/styrene; graft copolymers of vinyl aromatic monomers such as copolymer mixtures known as ABS, MBS, ASA or AES polymers.
- Halogen-containing thermoplastic polymers such as polyvinyl chloride, polyvinylidene chloride, polyvinyl fluoride, polyvinylidene fluoride.

In order to achieve the goals of the present invention, there is no stringent limitation on the proportion of the thermoplastic polymer material (A) with respect to the organic phosphorus-containing compound(s) (B) and the hindered amine(s) (C), as long as a homogeneous blend or mixture of these three essential components can be obtained without processing difficulty. In one embodiment of the present invention the flame retardant pre-expanded polymer material is preferably one wherein the weight ratio (A)/(B)+(C) is from 3 to 48, more preferably from 15 to 40. For cost reasons, since the flame-retardant additives (B) and (C) are much more expensive than the thermoplastic polymer material (A), the proportions by weight of these additives in the pre-expanded polymer material of the invention (including further optional non-flame retardant additives, see below) should preferably be limited to:
- about 1.8% to 3.0% by weight of the organic phosphorus-containing compound(s) (B), and
- about 0.2% to 1.0% by weight of the hindered amine(s) (C).

In some cases, depending upon the selection of the thermoplastic polymer material (A), the organic phosphorus-containing compound (B) and the hindered amine (C), it may be useful to first prepare a so-called master-batch of the blend. Under such instances, the weight ratio (A)/(B)+(C) in the master-batch may be from about 3 to 15, and the master-batch is then further diluted with additional amounts of the thermoplastic polymer material (A) to achieve the desirable final polymer proportion.

If it is useful for certain end uses of the resulting thermoplastic polymer foam, the flame retardant pre-expanded polymer material of the present invention may further comprise, in usual proportions for these types of (non-flame retardant) additives, one or more known functional additives or fillers such as, but not limited to:
- Antioxidants such as alkylated monophenols, alkyltyhiomethylphenols, hydroquinones and alkylated hydroquinones, tocopherols, hydroxylated thiodiphenyl ethers, alkylidene bisphenols, O-, N- and S-containing benzyl compounds, hydroxybenzylated malonates, aromatic hydroxybenzyl compounds, acylaminophenols, amides and esters of hydroxyphenylpropionic acid, and aminated antioxidants;
- UV light absorbers such as benzotriazoles, benzophenones, benzoic acid esters, nickel complexes, sterically hindered amines which (contrary to the ingredient (C) of the present invention) do not possess an OR group directly linked to their N-atom, and oxamides;
- Peroxide scavengers such as mercaptobenzimidazole;
- Inorganic nucleating agents such as, but not limited to, talcum, titanium oxide, magnesium oxide, magnesium carbonate and magnesium sulfate; organic nucleating agents such as, but not limited to, mono- or polycarboxylic acids (e.g. adipic or diphenylacetic) and salts thereof, ionic copolymers and the like;
- Fillers and reinforcing agents such as, but not limited to, silicates, glass fibers, kaolin, wood flour, and the like;
- Lubricants such as fatty acid esters, polyethylene waxes (which may be optionally partly saponified), zinc stearate, glycerol esters, and alkaline earth metal soaps.

The flame retardant pre-expanded polymer material according to the present invention preferably exhibits a bulk density from 10 kg/m³ to 300 kg/m³. In one particular embodiment the bulk density ranges from about 15 kg/m³ to 200 kg/m³, or from about 20 kg/m³ to 60 kg/m³. The flame retardant pre-expanded polymer material according to the present invention preferably exhibits an average cell diameter ranging from 50 to 1,000 µm, especially from 100 to 500 µm. It is preferable that the proportion of closed cells in the flame retardant pre-expanded polymer material according to the present invention ranges from about 90% to 99%. If the closed cells proportion is lower than 90%, the foamed product prepared from the expanded particles may easily shrink, and the melt adhesion property decreases.

In one embodiment of the present invention, the flame retardant pre-expanded polymer material may further comprise carbon black and/or powdered activated carbon either to impart a grey color to the resulting foam or to further participate into the enhancement of the flame retardancy, depending upon the amount used. In contrast with the teaching of EP 2611860, it has been found that from 0.01% to 0.5% by weight carbon black does not alter or impair the flame retardant properties of the pre-expanded thermoplastic material, and of the foamed product made therefrom. In line with the teaching of EP 2611860, it has been found that from 0.5% to 3% by weight powdered activated carbon (PAC) together with the organic phosphorus-containing compound (B) and the hindered amine (C) makes it possible to retain or even further increase the flame retardant properties of the pre-expanded thermoplastic material, and of the foamed product made therefrom.

Broadly speaking, the flame retardant pre-expanded polymer material of the present invention may be produced by a process comprising the steps of:
- providing a mixture of a thermoplastic polymer material (A) with an organic phosphorus-containing compound (B) wherein the phosphorus-containing compound (B) is not a phosphoric ester, and a hindered amine (C) having an OR group substituted directly on the N-atom of the hindered amine, wherein R is a saturated or unsaturated hydrocarbyl group, the weight ratio (B)/(C) being from 1.9 to 10, and the weight ratio (A)/(B)+(C) optionally being from 3 to 48,
- impregnating said mixture with a volatile blowing agent in an aqueous suspension under high temperature and high pressure conditions, and
- decompressing the impregnated mixture to atmospheric pressure.

Within the framework of this process, each particular embodiment of the thermoplastic polymer material (A), the organic phosphorus-containing compound (B), and the hindered amine (C), as described above, is applicable. The production process of the present invention will be explained in more details hereinafter.

The polymer resin is usually processed into a desired particulate shape so as to make it easier to use in pre-expansion, for example, by melting in extruder, kneader, Banbury mixer or roll mill, and forming into particles having a desired shape, such as sphere, cube or parallelepiped, and having an average particle size of 0.1 to 10 mm, preferably 0.7 to 5 mm. The organic phosphorous-containing compound (B), the hindered amine (C) and optionally other additives, like carbon black and/or powdered activated carbon (PAC), are added to the molten resin in the step of preparing the resin particles.

The process for preparing the thermoplastic polymer pre-expanded particles of the present invention is not particularly limited, and processing steps known to the skilled person in the art are applicable. For example, the pre-expanded particles may be produced by dispersing the thermoplastic polymer resin particles (A) into an aqueous dispersion medium, typically water, in a pressurized vessel to form a dispersion, then impregnating the particles with a blowing agent with stirring, heating the dispersion under pressure to a prescribed expansion temperature, and releasing the dispersion into a low pressure zone to thereby expand the particles.

In order to achieve the expansion, volatile blowing agents are used and can be incorporated by different means. Concerning the chemical nature of the blowing agent, various types of blowing agents are known. One class of applicable blowing agents is hydrocarbons, which can be linear alkanes such as n-butane, n-pentane, n-hexane, or n-heptane, or branched alkanes such as isobutane, or cycloalkanes such as cyclobutane, cyclopentane, or cyclohexane. Halogenated hydrocarbons can also be used as blowing agents, including chlorodifluoromethane, dichloromethane, dichlorofluoromethane, chloroethane, and dichlorotrifluoroethane. It is also possible to use alkanols, such as methanol, ethanol, n-propanol, isopropanol or n-butanol. Ketones are also known as blowing agents, such as 3,3-dimethyl-2-butanone and 4-methyl-2-pentanone. The use of ethers and esters is also known in the art. Blowing agents which are gaseous at room temperature, such as carbon dioxide, air, nitrogen, isobutane or noble gases, are preferred. Mixtures of the above-mentioned blowing agents can be used as well.

The amount of the blowing agent is not particularly limited, and is suitably selected according to a desired degree of expansion of the pre-expanded particles to be produced. However, the blowing agent is generally used in an amount of 5 to 50 parts by weight per 100 parts by weight of the thermoplastic polymer resin particles.

In the preparation of an aqueous dispersion of the thermoplastic polymer particles, a dispersing agent such as calcium tertiary phosphate, basic magnesium carbonate, calcium carbonate or kaolin may be used. A surfactant such as sodium dodecylbenzenesulfonate, sodium n-paraffinsulfonate or sodium α-olefinsulfonate may also be used as a dispersing aid. These may be used alone or in mixtures thereof. The amounts of such dispersing agent and surfactant vary depending upon the kinds thereof, and upon the kind and amount of the thermoplastic polymer particles used. Usually the amount of dispersing agent is from 0.2 to 3 parts by weight per 100 parts by weight of water, and the amount of surfactant is from 0.001 to 0.1 part by weight per 100 parts by weight of water. The polymer particles to be dispersed into an aqueous dispersion medium such as water are generally used in an amount of 20 - 100 parts by weight per 100 parts by weight of water in order to achieve good dispersion into water.

Usually the thermoplastic polymer particles are introduced into a pressurized vessel with water and a blowing agent to form an aqueous dispersion of the particles, and are impregnated with the blowing agent at an elevated temperature, e.g., a temperature higher than the softening point of the polymer resin used. Depending upon the nature of the thermoplastic polymer material (A), this temperature is preferably between about 100°C and 170°C. The dispersion of the polymer particles containing a blowing agent is then heated under pressure to an expansion temperature in the pressurized vessel, and then released from the vessel into an atmosphere of lower pressure through an orifice having openings with a diameter of about 2 to 10 mm, thereby expanding the polymer resin particles to give the polymer pre-expanded particles of the present invention. The expansion temperature is generally from 110 to 160°C. The expansion pressure is selected primarily according to the prescribed expansion ratio, and is preferably from 5 to 50 bars. There is no particular limitation in the pressurized vessel used, as long as it can withstand the pressures and temperatures noted above. A representative vessel is an autoclave type pressure vessel.

In an alternative extrusion-foaming process, the polymer is mixed while melting in an extruder, with a blowing agent which is introduced into the extruder. This mixture can be extruded and pelletized, for example by means of underwater pelletization, in either atmospheric or pressurized conditions. The extrudate foams and the obtained product is the polymer pre-expanded particle.

The expanded thermoplastic polymer products of the present invention may further contain various additives (as specified hereinabove) which may be incorporated into the thermoplastic polymer (A) at various processing steps. For example, it is possible to incorporate additives at the same time as the expansion by the blowing agent in the impregnation process involving suspended granules of polymer. It is also possible to carry out a specific extrusion process to incorporate additives, either simultaneously with or prior to expansion with a blowing agent.

In a preferred way of carrying out the process according to the present invention, the organic phosphorus-containing compound (B) and the hindered amine (C) are incorporated into granules of a thermoplastic polymer (e.g. polyolefin) (A) with melting in an extruder. Following this, the material comprising the thermoplastic polymer (A), the organic phosphorus-containing compound (B) and the hindered amine (C), and optionally other additives, is extruded and then converted into small pellets. These small pellets are then subjected to an expansion process, at a pressure ranging from about 5 to 50 bars and at a temperature ranging from about 100 to 170°C.

Suspension aids can be used such as, but not limited to, tricalciumphosphate, magnesium pyrophosphate, metal carbonates and kaolin. Other possible suspension aids include polyvinyl alcohol and sulphonate-based surfactants. These materials facilitate the dispersion of the polyolefin granulate in the reactor.

The present invention also relates to flame retardant foamed articles prepared by in-mold foaming or extrusion-foaming of the flame retardant pre-expanded polymer material disclosed herein.

Known methods may be used for in-mold foaming of the polymer resin pre-expanded particles of the present invention. Examples thereof include (1) a method that directly uses the pre-expanded particles; (2) a method that imparts foaming ability by injecting inorganic gas, such as air, into the pre-expanded articles in advance; and (3) a method that fills a mold with pre-expanded particles in a compressed state.

One example of the method for forming an in-mold foamed article from the polymer resin pre-expanded particles of the present invention includes air-compressing the pre-expanded particles in a pressure vessel in advance to inject air into the particles to thereby impart the foaming ability, filling a mold that can enclose but cannot hermetically seal its interior with the pre-expanded particles, molding the particles with a heating medium such as steam at a heating steam pressure ranging from about 2 to 40 bars within a heating time ranging from about 3 to 30 seconds, to cause fusion between the polymer resin pre-expanded particles, cooling the mold with water to a level that can suppress deformation of the in-mold foamed article after the in-mold foamed article is taken out from the mold, and opening the mold to obtain the in-mold foamed article.

The resulting foamed articles show excellent flame resistance or self-extinguishing properties, and remarkable mechanical and outstanding cushioning and energy absorption propserties in view of their very low density. Therefore they can be suitably used in various fields of industry, particularly in a technical field which requires a flame resistant and none-dripping property, such as the passenger transport industry (e.g. vehicle interior parts, where one or more safety standards such as FMVSS 302, ISO 3795, UN/ECE/324 Reg.118, EN 45545-2, FAR 25.853, and IMO safety standards may need to be met), the electric and electronic industries (e.g. plastic parts for electric and electronic devices and appliances where one or more safety standards such as UL94, ISO 9772 and ISO 9773 may need to be met), and the building industry (e.g. plastic material elements for heating, ventilation and air-conditioning, like housings for boilers and heating systems, and pipes for ventilation systems, where one or more safety standards such as ISO 11925-2, EN 13823, ISO 1182, ISO 1716, NF 92-501 and DIN 4102 may need to be met).

The main advantages of the present invention are the following:
- easiness of continuous, semi-continuous or discontinuous operation,
- easiness to achieve a required level of flame retardancy,
- a foam having good mechanical properties, cushioning properties and surface appearance,
- a foam exhibiting good moldability or extrudability, and generating no harmful gases when burning,
- possibility to recycle a cheap and readily available raw material into a higher value material or shaped article,
- processing using standard production equipment and procedures,
- processes requiring little energy consumption.

The following examples are given for the purpose of explaining and illustrating the present invention, as well as illustrating some of its resulting advantages.

### EXAMPLES 1 - 5 and Comparative Examples 1 - 2

An ethylene-propylene random copolymer (ethylene content 2.2% by weight, melt index 8.0 g/10 min) was mixed with an organic phosphorus-containing compound (trademark AFFLAMMIT PCO900 from Thor GmbH) and a hindered amine ether flame retardant (trade mark FLAMSTAB NOR116 from BASF), and carbon black or powdered activated carbon (PAC) in the amounts by weight shown in table 1 below, and nucleating additive, anti-oxidant and UV absorber in amounts such that the combined amounts of all ingredients equal 100 parts by weight. The median particle size of the PAC used in Example 2, was about 3 µm and its internal surface area was about 1000 m²/g. The resulting mixture was kneaded by a twin-screw extruder and formed into resin particles having a weight of 1.2 mg/particle. The melting point of the obtained resin particles was 150°C.

A 10 litre pressurized vessel was charged with 100 parts of the resin particles, blowing agent in amount shown in table 1 and a dispersion medium (150 parts of water containing 1.3 parts of powdery basic calcium tertiary phosphate and 0.02 parts of sodium n-paraffin sulfonate). The resulting aqueous dispersion was heated to an expansion temperature, and pressurized to an expansion pressure by the introduction of blowing agent to the vessel, as shown in table 1. A valve provided at a lower part of the pressure vessel was opened and, while maintaining the pressure inside the vessel at that pressure by introducing a nitrogen gas, the aqueous dispersion was released into the atmosphere through an orifice plate having openings of 4.5 mm diameter to give pre-expanded particles. The pre-expanded particles were evaluated. The pre-expanded particles were placed in a pressure vessel and compressed by air pressure, and the compressed particles were filled in a mold having a size of 370 × 370 × 60 mm at a compression ratio of at least 10%. The particles were then heated for 20 seconds with steam of 1.5 to 3.5 bar to fuse them together. The obtained in-mold foamed article was evaluated.

The results obtained after evaluation according to the methods specified herein are as shown in table 2 below. Examples 1 - 7 and Comparative Examples 1 - 3 show that the incorporation of an organic phosphorus-containing compound (B) and a hindered amine (C) to the pre-expanded polymer beads surprisingly improves the fire retardant and none-dripping behaviour of the molded article obtained from the beads.

### METHODS OF EVALUATION

### Bulk density of pre-expanded foam particles

A container with a volume V1 of 10 litres (L) was filled with dried pre-expanded particles, and the weight W1 (g) of the particles was exactly measured. The bulk density D (g/L) of the pre-expanded particles was calculated according to the following equation: D = W1/V1 = W1/10.

### Density of in-mold foamed articles

The apparent density MD (g/L) of the in-mold foamed article shown in table 2 was calculated by dividing the weight W2 (g) of the foamed article by the volume V2 (L) of the foamed article: MD = W2/V2

### Burning and dripping behaviour

The burning and dripping behaviour was measured and evaluated in accordance with the UL94 "Horizontal Burning foamed material test".

10 specimens were cut away from an in-mold foamed article, with sizes of 150 ± 5mm x 50 ± 1 mm x 13 mm and leaving the skin layer on the surface of 150 mm x 50mm. Each specimen was marked across its width with three lines, at 25 mm, 60 mm and 125 mm from one end. One set of 5 specimens was preconditioned for minimum 48 hours at 23 ± 2°C and 50 ± 5% relative humidity until immediately prior to testing. A second set of 5 specimens was preconditioned for 168 hours at 70 ± 2°C in an oven and then cooled in the desiccator for at least 4 hours at 23 ± 2°C and 50 ± 5% relative humidity. The latter preconditioning procedure simulated the ageing of the material.

The test setup involved a specimen support gauze, held in a support fixture such that the major section was horizontal and 13 ±1 mm above the tip of the burner wing tip, and 175 ±25 mm above a horizontal layer of absorbent 100 percent cotton, thinned to approximately 50 x 50 mm and a maximum thickness of 6 mm. The cotton was located under the front upturned portion of the wire cloth. At the start of the test, a burner with a wing tip, supplied with methane gas, was ignited to produce a yellow-tipped flame with a height of 38 mm. Next, a specimen was placed horizontally on the support gauze with the side having a high density exterior skin facing down. The flame was applied for 60 seconds and was then removed from the specimen.

The following information was recorded during the test, and is presented in Table 2:
(a) After flame time in seconds, being the time when the flaming ceased, after the flame was removed.
(b) Afterglow time in seconds, being the time when the glowing ceased after the flame was removed.
(c) Total distance the specimen burned (L_{b}), in mm, from the end of the specimen where the flame was applied up till the 125 mm mark.
(d) Whether the specimen dripped particles.
(e) Whether or not the dry absorbent cotton placed below the test specimen was ignited by dripping particles.

**Table 1**

| | **Polymer (A)** | **Organic phosphorus containing compound (B)** | | **hindered amine (C)** | | **Others Additive (D)** | | **Ratio** | **Ratio** | **Expansion conditions** | | | **Preexpanded particles** |
|---|---|---|---|---|---|---|---|---|---|---|---|---|---|
| | **Parts by weight** | **Type** | **Parts by weight** | **Type** | **Parts by weight** | **Type** | **Parts by weight** | **(B) / (C)** | **(A) / (B)+(C)** | **Blowing agent** | **Temp (°C)** | **Pressure (bar)** | **Bulk density (g/L)** |
| Ex 1 | 94,9 | Aflammit PCO900 | 2,7 | Flamstab NOR116 | 1,0 | Carbon black | 0,30 | 2,7 | 25,7 | CO₂ | 154,5 | 26,0 | 34 |
| Ex 2 | 93,8 | Aflammit PCO900 | 2,7 | Flamstab NOR116 | 1,0 | PAC | 2,2 | 2,7 | 25,4 | CO₂ | 155,0 | 24,0 | 38 |
| Ex 3 | 95,7 | Aflammit PCO90C | 2,7 | Flasmtab NOR116 | 1,0 | - | - | 2,7 | 25,9 | CO₂ | 153,6 | 25,5 | 39 |
| Ex 4 | 96 | Aflammit PCO900 | 1,8 | Flamstab NOR116 | 0,2 | Carbon black | 0,38 | 9,0 | 48,0 | CO₂ | 153,0 | 30,0 | 27 |
| Ex 5 | 95,5 | Aflammit PCO900 | 2,7 | Flamstab NOR116 | 0,3 | Carbon black | 0,38 | 9,0 | 31,8 | CO₂ | 153,0 | 30,0 | 28 |
| | | | | | | | | | | | | | |
| Comp, Ex. 1 | 96,9 | | - | - | - | Carbon black | 2,50 | - | - | Air | 157,5 | 31,5 | 33 |
| Comp. Ex. 2 | 96,3 | - | - | Flamstab NOR116 | 3,00 | Carbon black | 0,38 | - | 32,1 | Isobutane | 148,3 | 16,7 | 20 |

| Table 2 | In mold foamed article | | | | | | |
|---|---|---|---|---|---|---|---|
| | Density | Specimen conditioned at 23°C /50%RH during 48 hours | | | Specimen conditioned at 70°C during 168 hours | | |
| | (g/L) | L_{b}(mm) | #specimens showing droplets | #specimen igniting cotton | L_{b} (mm) | #specimen showing droplets | #specimen igniting cotton |
| Ex 1 | 48 | 21,4 | 0 | 0 | 22,0 | 0 | 0 |
| Ex 2 | 40 | 22 | 0 | 0 | 22,2 | 0 | 0 |
| Ex 3 | 50 | 18,8 | 0 | 0 | 22,6 | 0 | 0 |
| Ex 4 | 39 | 37,4 | 4 | 0 | 34,0 | 0 | 0 |
| Ex 5 | 42 | 22,2 | 0 | 0 | 21,0 | 0 | 0 |
| | | | | | | | |
| Comp. Ex. 1 | 45 | 125 | 5 | 5 | 125 | 5 | 5 |
| Comp. Ex. 2 | 45 | 109 | 5 | 5 | 113 | 5 | 5 |

## Claims

1. A flame retardant pre-expanded polymer material comprising:
(A) a thermoplastic polymer material;
(B) an organic phosphorus-containing compound; and
(C) a hindered amine having an OR group substituted directly on its N-atom, wherein R is a saturated or unsaturated hydrocarbyl group;
wherein the phosphorus-containing compound (B) is not a phosphoric ester or a phosphate, and wherein the weight ratio (B)/(C) is from 1.9 to 10.

2. A flame retardant pre-expanded polymer material according to claim 1, wherein the weight ratio (A)/(B)+(C) is from 3 to 48.

3. A flame retardant pre-expanded polymer material according to any one of claims 1 and 2, wherein the organic phosphorus-containing compound (B) is nitrogen-free.

4. A flame retardant pre-expanded polymer material according to claim 3, wherein the organic nitrogen-free phosphorus-containing compound (B) is selected from the group consisting of organic phosphites; alkylphosphonic and arylphosphonic acids, and esters thereof; cyclic phosphonates; cyclic bisphosphonates; phosphinates, phosphinites, phosphonites, and salts thereof; and polyol phosphate alcohols.

5. A flame retardant pre-expanded polymer material according to any one of claims 1 and 2, wherein the organic phosphorus-containing compound (B) is a nitrogen-containing phosphorus-containing compound.

6. A flame retardant pre-expanded polymer material according to claim 5, wherein the organic nitrogen-containing phosphorus-containing compound (B) is selected from the group consisting of phosphoramidates, phosphoramidites, phosphonamides, phosphinamides, and organic phosphazenes and salts thereof.

7. A flame retardant pre-expanded polymer material according to any one of claims 1 to 6, having a bulk density from 10 kg/m³ to 300 kg/m³, and/or an average cell diameter from 50 to 1,000 µm.

8. A flame retardant pre-expanded polymer material according to any one of claims 1 to 7, further comprising from 0.01% to 0.5% by weight carbon black and/or from 0.5% to 3% by weight powdered activated carbon.

9. A flame retardant pre-expanded polymer material according to any one of claims 1 to 8, wherein the thermoplastic polymer material (A) is selected from the group consisting of low density polyethylene, high density polyethylene, polypropylene, poly(propylene-co-ethylene), polystyrene, and polycarbonate.

10. A flame retardant foamed article prepared by in-mold foaming or extrusion-foaming of the flame retardant pre-expanded polymer material according to any one of claims 1 to 9.

11. A flame retardant foamed article according to claim 10, being selected from the group consisting of parts used in vehicles, building, construction, furniture, electrical and electronic appliances.

12. A process for producing a flame retardant pre-expanded polymer material according to any one of claims 1 to 9, comprising the steps of:
- providing a mixture of a thermoplastic polymer material (A) with an organic phosphorus-containing compound (B) wherein the phosphorus-containing compound (B) is not a phosphoric ester or a phosphate, and with a hindered amine (C) having an OR group substituted directly on the N-atom of the hindered amine, wherein R is a saturated or unsaturated hydrocarbyl group, the weight ratio (B)/(C) being from 1.9 to 10,
- impregnating said mixture with a volatile blowing agent in an aqueous suspension under high temperature and high pressure conditions, and
- decompressing the impregnated mixture to atmospheric pressure.
